# EUROPÄISCHE PATENTSCHRIFT

(11) **EP 3 570 189 B1**
(45) Veröffentlichungstag und Bekanntmachung des Hinweises auf die Patenterteilung: **09.08.2023**
(21) Anmeldenummer: 18172009.5
(22) Anmeldetag: 14.05.2018
(51) Int. Cl.: G10L 15/22, G06N 5/04, G10L 15/26, G06N 3/006, G06F 40/30

(54) **COMPUTERIMPLEMENTIERTES VERFAHREN ZUM BEREITSTELLEN EINES ADAPTIVEN DIALOGSYSTEMS UND EIN ADAPTIVES DIALOGSYSTEM**
AN ADAPTIVE DIALOGUE SYSTEM AND COMPUTER-IMPLEMENTED METHOD FOR PROVIDING AN ADAPTIVE DIALOGUE SYSTEM
PROCÉDÉ MIS EN OEUVRE PAR ORDINATEUR DESTINÉ À FOURNIR UN SYSTÈME DE DIALOGUE ADAPTATIF ET UN SYSTÈME DE DIALOGUE ADAPTATIF

(43) Veröffentlichungstag der Anmeldung: 20.11.2019
(73) Patentinhaber: Siemens Aktiengesellschaft, 80333 München (DE)
(72) Erfinder: Langen, Manfred, 81827 München (DE)
(74) Vertreter: Siemens Patent Attorneys

(56) Entgegenhaltungen:
- US-A1- 2011 238 410
- US-A1- 2016 196 490

## Beschreibung

Die vorliegende Erfindung betrifft ein computerimplementiertes Verfahren zum Bereitstellen eines adaptiven Dialogsystems. Weiterhin betrifft die Erfindung ein adaptives Dialogsystem.

### Stand der Technik

In vielen Softwareanwendungen und elektronischen Geräten kommen technische Dialogsysteme, sogenannte Chatbots zum Einsatz. Diese finden gerade dort Anwendung, wo der Anwender (menschliche Nutzer) der Softwareanwendung oder des elektronischen Gerätes auf von ihm gestellte Anfragen, sogenannte Dialogsegmente, eine automatische Antwort erhalten möchte, ohne dabei direkt in den Antwortprozess einzugreifen. Chatbots sind im Stand der Technik bekannt, beispielsweise "Siri" von der Firma Apple, welches eine installierte Softwareanwendung auf Handhelds und Computern ist und entsprechend auf eine Nutzeranfrage eine Antwortreaktion ausgibt und/oder ausführt. Ein weiteres Beispiel für ein technisches Dialogsystem stellen Roboter dar, wie beispielsweise der einem Menschen nachempfundene humanoide Roboter "Pepper", der darauf programmiert ist, Menschen und deren Mimik und Gestik zu analysieren und auf diese Emotionszustände entsprechend zu reagieren.

Chatbots und auch humanoide Roboter sollen stetig ihr Repertoire an Antwortreaktionen, und somit ihren vorhandenen Dialograum durch Interaktion mit dem menschlichen Nutzer, erweitern. Die derzeit zur Verfügung stehenden Möglichkeiten einer Lernfähigkeit bzw. einer Selbstlernfähigkeit eines Chatbots/Roboters durch die Interaktion oder Konversation mit einem menschlichen Nutzer sind noch stark eingeschränkt.

Um entsprechende Nutzeranfragen zu verarbeiten bzw. auf diese zu reagieren/zu antworten, verwenden Chatbots/Roboter Wissensdatenbanken, welche entsprechend dem vorgesehenen Einsatzfeld des Chatbots/Roboters programmiert werden. Infolgedessen werden immer wieder Nutzeranfragen in einer Konversation zwischen dem Chatbot/Roboter und dem menschlichen Nutzer auftauchen, die nicht in eine adäquate und erwartete Antwortreaktion umgesetzt werden können. Die in einer Konversation häufig gestellten Fragen hängen zum größten Teil stark vom Einsatzszenario sowie dem jeweiligen menschlichen Nutzer ab und können durch den Hersteller des Chatbots/Roboters nur bedingt vorhergesagt und entsprechend programmiert werden. Die in Antwortlücken resultierende nicht vollumfangreiche Programmierung der Chatbots/Roboter, wird durch verschiedene Verfahren ergänzt.

Eine Möglichkeit, welche im Stand der Technik bekannte Chatbots/Roboter nutzen, ist das Zurückgreifen auf "Fallback Reaktionen". Mit den Fallback Reaktionen, wie beispielsweise "ich habe Sie leider nicht verstanden", "could you please rephrase your question" oder "lass uns über etwas anderes reden", um nur eine wenige zu nennen, versucht der Softwarealgorithmus, wenn auf die Nutzerfrage keine entsprechende Antwortreaktion vorliegt bzw. programmiert ist, den menschlichen Nutzer derart zu leiten, dass dieser eine Frage stellt, die eventuell so ähnlich ist und mit einer Antwort in der Datenbank hinterlegt ist, oder die Konversation ganz in eine andere Richtung zu verlagern.

Eine weitere Möglichkeit ist die Verwendung der nicht verstandenen Dialogsegmente für eine Suche in einer Suchmaschine, beispielsweise Google, um den besten Suchmaschinentreffer als Antwort zurückzugeben. Dies führt in den meisten Fällen dazu, dass eine Webseite, welche die Antwort enthalten kann, vollständig zurückgegeben wird.

Es besteht daher ein Bedarf nach einem computerimplementierten Verfahren zum Bereitstellen eines adaptiven Dialogsystems. Insbesondere besteht ein Bedarf nach einem adaptiven Dialogsystem, welches Antwortlücken möglichst schnell und komfortabel schließt.

US 2011/0238410 A1 betrifft ein semantisches Clusterbildungsverfahren, das mit einem konventionellen Agenten Spracheeingaben eines Nutzers aufnimmt und eine linguistische Analyse der Spracheingaben durchführt.

US 2016/0196490 A1 betrifft ein Verfahren und eine Vorrichtung für das Verarbeiten von Anfragen an ein Informationsverarbeitungssystem, das in der Lage ist Fragen auf Basis einer Wissensbasis zu beantworten.

### Offenbarung der Erfindung

Die vorliegende Erfindung schafft ein computerimplementiertes Verfahren zum Bereitstellen eines adaptiven Dialogsystems mit den Merkmalen des Patentanspruchs 1 und ein adaptives Dialogsystem mit den Merkmalen des Patentanspruchs 9.

Demgemäß ist vorgesehen:
ein computerimplementiertes Verfahren zum Bereitstellen eines adaptiven Dialogsystems mit einem Schritt zum automatischen Erfassen wenigstens eines Dialogsegmentes eines mit dem Dialogsystem kommunizierenden Dialogteilnehmers. Das Verfahren umfasst ferner ein automatisches Vergleichen des erfassten Dialogsegmentes mit Dialogsegmenten eines gespeicherten Dialogsegmentemodells. Weiterhin umfasst das Verfahren ein automatisches Zuordnen wenigstens eines entsprechenden Dialogsegmentes zu dem erfassten Dialogsegment entsprechend dem Dialogsegmentemodell, falls das erfasste Dialogsegment in dem Dialogsegmentemodell enthalten ist, oder ein automatisches Hinzufügen des erfassten Dialogsegmentes zu einer Dialogsegmentegruppe, falls das erfasste Dialogsegment nicht in dem Dialogsegmentemodell enthalten ist, wobei die Dialogsegmente der Dialogsegmentegruppe kategorisiert werden, und
wobei die kategorisierten Dialogsegmente nach der Häufigkeit ihres Auftretens innerhalb der jeweiligen Kategorie gewichtet werden, wodurch eine Sortierung innerhalb der Kategorie erfolgt. Ferner umfasst das Verfahren den Schritt zum Generieren eines Dialogsegmentes in Abhängigkeit der Dialogsegmente der Dialogsegmentegruppe, wobei Dialogsegmente mit der höchsten Priorität gemäß der Sortierung zuerst bearbeitet werden. Weiterhin umfasst das Verfahren ein Speichern des generierten Dialogsegmentes in dem Dialogsegmentemodell.

Dabei ist unter einem Dialogsegment insbesondere eine Kombination von gesprochenen oder geschriebenen Wörtern, als auch ganzen Sätzen zu verstehen.

Dabei ist unter einem Dialogsegementemodell insbesondere der Umfang der bekannten Dialogsegmente zu verstehen, zu denen das adaptive Dialogsystem eine entsprechende Antwort bereitstellen kann.

Dabei ist unter einer Dialogsegmentegruppe insbesondere eine Auflistung der vom adaptiven Dialogsystem erfassten aber nicht bekannten Dialogsegmente zu verstehen, welche gespeichert werden kann und somit zu einer weiteren Verarbeitung bereitgestellt wird.

Weiterhin ist vorgesehen:
ein adaptives Dialogsystem umfassend eine Erfassungseinheit, welche dazu ausgebildet ist, wenigstens ein Dialogsegment eines Dialogteilnehmers zu erfassen, eine Speichereinheit, welche dazu ausgebildet ist, wenigstens ein erfasstes Dialogsegment eines Dialogteilnehmers zu speichern, eine Prozessoreinheit, welche dazu ausgebildet ist, wenigstens ein erfasstes Dialogsegment mit Dialogsegmenten eines gespeicherten Dialogsegmentemodells automatisch zu vergleichen und ein Dialogsegment zu dem wenigstens einen erfassten Dialogsegment entsprechend dem Dialogsegmentemodell zuzuordnen, falls das erfasste Dialogsegment in dem Dialogsegmentemodell enthalten ist oder wenigstens ein erfasstes Dialogsegment zu einer Dialogsegmentegruppe automatisch hinzuzufügen, falls das erfasste Dialogsegment nicht im Dialogsegmentemodell enthalten ist, wobei die Dialogsegmente der Dialogsegmentegruppe kategorisiert werden, und
wobei die kategorisierten Dialogsegmente nach der Häufigkeit ihres Auftretens innerhalb der jeweiligen Kategorie gewichtet werden, wodurch eine Sortierung innerhalb der Kategorie erfolgt;
und eine Ausgabeeinheit, welche dazu ausgebildet ist, die Dialogsegmentegruppe einem Dialogagenten bereitzustellen, und eine Schnittstelle (50), die dazu ausgebildet ist, ein durch den Dialogagenten in Abhängigkeit eines Dialogsegmentes der Dialogsegmentegruppe generiertes Dialogsegment zu empfangen, wobei Dialogsegmente mit der höchsten Priorität gemäß der Sortierung zuerst bearbeitet werden, und
wobei das generierte Dialogsegment in dem Dialogsegmentemodell gespeichert wird.

Schließlich ist vorgesehen:
Ein Chatbot oder Roboter mit einem erfindungsgemäßen adaptiven Dialogsystem.

### Vorteile der Erfindung

Der vorliegenden Erfindung liegt die Kenntnis zugrunde, dass gerade durch eine schnelle und komfortable Erweiterung des Dialogsegmentemodells und somit der Möglichkeit auf alle Dialogsegmente (Fragen) der menschlichen Nutzer eine entsprechende Antwort zu geben, eine erhöhte Akzeptanz der menschlichen Nutzer gegenüber der Chatbots/Roboter gegeben ist. Somit kann ein erhöhter Absatz an Chatbots/Roboter erreicht werden.

Des Weiteren wird die Leistungsfähigkeit der Chatbots/Roboter derart gesteigert, dass sich ein erhöhtes Einsatzspektrum in unterschiedlichsten Anwendungen mit den unterschiedlichsten Aufgaben für diese ergibt.

Zusätzlich ergibt sich durch vorliegende Erfindung die Möglichkeit, Hardwareressourcen, welche für ein aufwendiges Suchen nach entsprechenden Antworten auf empfangene Dialogsegmente benötigt werden, einzusparen. Dies resultiert darin das sowohl der Speicher, als auch die notwendige Prozessorrechenleistung geringer ausgelegt werden können, da keine Antworten auf empfangene Dialogsegmente aufwendig im Internet über Querysuchen gesucht werden und anschließend ausgewertet werden müssen, um dem Dialogteilnehmer eine korrekte Antwort zu geben.

Mittels des adaptiven Dialogsystems erfolgt eine kontinuierliche Überwachung bzw. ein Monitoring der Non-Corformance. Dies ergibt sich aus der Tatsache, dass mit der vorliegenden Erfindung vorteilhafterweise alle nicht verstandenen Dialogsegmente gespeichert werden und anschließend strukturiert zu Weiterverarbeitung bzw. zur Aufbereitung bereitgestellt werden, so das diesen zunächst unbekannten Dialogsegmenten (Fragen) entsprechende Dialogsegmente (Antworten) zugeordnet werden und der Chatbot/Roboter zukünftig auf diese Fragen wie durch den menschlichen Nutzer erwartet reagieren kann. Die sogenannte Non-Conformance wird somit durch korrigierende Maßnahmen beseitigt. Vorteilhafterweise wird durch die vorliegende Erfindung somit eine Möglichkeit bereitgestellt, unmittelbar Gegenmaßnahmen für die Non-Corformance einzuleiten.

Zudem ist mittels des adaptiven Dialogsystems eine strukturierte Erweiterung und Verbesserung des Dialogsegmentemodells gegeben, wodurch gerade der Aufwand für die Entwicklung des Dialogsegmentemodell zu Beginn des Entwicklungsprozesses maßgeblich reduziert werden kann. Auch ist der Entwicklungsaufwand für "Fallback Reaktionen" sehr gering, da gerade durch die vorteilhafte Lernfähigkeit des adaptiven Dialogsystems die Notwendigkeit von "Fallback Reaktionen" nicht mehr gegeben ist.

Ein weiterer Vorteil, der sich durch die Möglichkeit zur Lernfähigkeit ergibt ist, dass das Dialogsegmentemodell mit einfachsten Mitteln und mit geringstem Aufwand erweitert werden kann. Eine aufwendige Neustrukturierung und Programmierung beispielsweise der Datenbank und/oder der Software des Chatbots/Roboters ist nicht notwendig. Die von einem menschlichen Nutzer abgegebenen, aber nicht bekannten Dialogsegmente bzw. nicht im Dialogsegmentemodell hinterlegten Dialogsegmente, werden gesammelt und strukturiert, nach Kategorien sortiert und priorisiert bereitgestellt, wodurch, eine effiziente Abarbeitung und Zuweisung von entsprechenden Antworten zu den Dialogsegmenten des menschlichen Nutzers erfolgen kann. Dies verringert den zeitlichen Aufwand zum Anlernen des Chatbots/Roboters bzw. den Programmierungsaufwand. Die neuen Dialogsegmentenpaare (Frage des menschlichen Nutzers und entsprechende Antwort) werden in das vorhandene Dialogsegmentemodell aufgenommen.

Gemäß einer Ausführungsform weist das erfasste Dialogsegment ein audio- und/oder ein textbasiertes Dialogsegment auf. Vorteilhafterweise können durch die vorliegende Erfindung audio-basierte Dialogsegmente von menschlichen Nutzern erfasst und verarbeitet werden. Weiterhin ist es vorteilhaft, dass auch audiobasierte Dialogsegmente vorliegend in einem digitalen oder analogen Format, durch das adaptive Dialogsystem erfasst und mittels dem computerimplementierten Verfahren verarbeitet werden können. Vorteilhafterweise können auch textbasierte Dialogsegmente, erstellt durch einen menschlichen Nutzer und dem adaptiven Dialogsystem über eine Schnittstelle, beispielsweise eine Tastatur, erfasst und verarbeitet werden.

Zusätzlich kann das adaptive Dialogsystem auch textbasierte Dialogsegmente aus Unterhaltungen, wie beispielsweise aus Chats von Kurznachrichtenmessangern, wie zum Beispiel WhatsApp, Twitter und Facebook erfassen und verarbeiten. Gemäß einer Ausführungsform wird das erfasste audio- und/oder textbasierte Dialogsegment in wenigstens einer Speichereinheit des Dialogsystems gespeichert. Vorteilhafterweise werden die durch den Chatbot/Roboter erfassten audio- und/oder textbasierten Dialogsegmente in einer Speichereinheit des adaptiven Dialogsystems gespeichert. Diese Speichereinheit kann beispielsweise eine austauschbare Speichereinheit sein, wie zum Beispiel eine Festplatte, eine SD-Karte oder eine integrierte Speichereinheit, wie zum Beispiel ein Random Access Memory (RAM).

Gemäß einer Ausführungsform wird das erfasste audiobasierte Dialogsegment mittels Spracherkennung automatisch in ein textbasiertes Dialogsegment gewandelt. Vorteilhafterweise wird das durch das adaptive Dialogsystem erfasste audiobasierte Dialogsegment durch eine Spracherkennung analysiert und automatisch in ein textbasiertes Dialogsegment umgewandelt und in der Speichereinheit gespeichert. Vorteilhafterweise werden sowohl das audio- als auch das textbasierte Dialogsegement gespeichert und für das Erstellen eines entsprechenden Dialogsegements als Antwort auf das erfasste Dialogsegment zur Verfügung gestellt.

Gemäß der Erfindung werden die Dialogsegmente der Dialogsegmentegruppe kategorisiert. Vorteilhafterweise werden die durch den Chatbot/Roboter erfassten, aber unbekannten Dialogsegmente eines menschlichen Nutzers oder aus einem Chat zunächst gesammelt und bereitgestellt. Die unbekannten Dialogsegmente, auch sogenannte "white utterances", werden automatisch durch eine "Natural Language Classifier" (NLC) in Kategorien/Cluster zusammengefasst. Hierbei werden unbekannte aber sich ähnelnde Dialogsegemente in einer Kategorie zusammengefasst, so dass verschiedene Varianten von sich ähnlichen, aber unbekannten Dialogsegmenten in einer Kategorie repräsentiert sind. Vorteilhafterweise wird hierdurch der Aufwand zur Steigerung der Lernfähigkeit reduziert, da in einer Kategorie verschiedene und eine entsprechend große Anzahl von Dialogsegmenten mit derselben Absicht abgehandelt werden können. Die Absicht stellt hierbei die Antwortreaktion des Chatbots/Roboters auf das vom menschlichen Nutzer abgegebene Dialogsegment oder in einem Chat erfasst Dialogsegment dar. Gemäß der Erfindung werden die kategorisierten Dialogsegmente nach der Häufigkeit ihres Auftretens innerhalb der jeweiligen Kategorie gewichtet. Vorteilhafterweise werden die kategorisierten Dialogsegmente innerhalb ihrer Kategorie entsprechend der Häufigkeit ihres Auftretens gewichtet. Hierdurch erfolgt eine Sortierung innerhalb der Kategorie, wodurch die unbekannten Dialogsegmente mit der höchsten Priorität zuerst bearbeitet werden. Dies hat den Vorteil, dass zunächst die unbekannten Dialogsegmente erlernt werden, welche vom menschlichen Nutzer und in Chats am häufigsten angefordert bzw. angefragt werden.

Gemäß einer Ausführungsform werden die kategorisierten Dialogsegmente über eine audio- und/oder visuelle und/oder textbasierte Ausgabeeinheit des Dialogsystems einem Dialogagenten bereitgestellt. Die automatisch zu einer Kategorie hinzugefügten und priorisierten unbekannten Dialogsegmente werden über eine Ausgabeeinheit, beispielsweise ein Graphical User Interface (GUI), durch ein Webinterface, über einen Bildschirm eines Handhelds oder Computers, über ein Audiogerät einem Dialogagenten bereitgestellt, welcher diesbezüglich den unbekannten in Kategorien vorliegenden Dialogsegementen entsprechende zugehörige Dialogsegmente bereitstellt.

Gemäß einer Ausführungsform wird in Abhängigkeit des bereitgestellten Dialogsegmentes ein Dialogsegment von dem Dialogagenten generiert. Der Dialogagent kann beispielsweise ein menschlicher Experte auf dem Gebiet der Kategorie sein und entsprechende Dialogsegmente (Antworten) auf die unbekannten Dialogsegmente generieren und dem adaptiven Dialogsystem bereitstellen. Vorteilhafterweise können somit auch sehr spezifische unbekannte Dialogsegmente korrekt, effizient und schnell erlernt werden.

In einer weiteren Ausführungsform kann der Dialogagent ein Knowledge Graph sein, wodurch aufbereitete und kompilierte Suchergebnisse entsprechend den Kategorien bereitgestellt werden und somit den unbekannten Dialogsegmenten zu geordnet werden.

Gemäß einer Ausführungsform ist das von dem Dialogagenten generierte Dialogsegment ein audio- und/oder textbasiertes Dialogsegment. Vorteilhafterweise umfasst das adaptive Dialogsystem eine Schnittstelle, womit audio- und/oder textbasierte Dialogsegmente (Antworten) des Dialogtrainers entsprechend den unbekannten Dialogsegmenten erfasst werden können.

Gemäß einer Ausführungsform wird das von dem Dialogagenten generierte Dialogsegment in dem Dialogsegementemodell in einem Speicherelement des Dialogsystems gespeichert. Vorteilhafterweise werden die nachtrainierten Dialogsegmentpaare (unbekanntes Dialogsegment im Dialogsegmentemodell und durch Dialogagenten bereitgestellte entsprechende Dialogsegment) in den Speicher und somit in die Anwendung des Chatbots/Roboters geladen, wodurch die Lücken, die "white utterances" im Dialogsegmentemodell geschlossen werden. Vorteilhafterweise erfolgt bei einer erneuten Anfrage des menschlichen Nutzers, nach dem Lernen, eine entsprechende Antwortreaktion des Dialogsystems durch die Ausgabe eines Dialogsegments entsprechend der Anfrage.

Gemäß einer Ausführungsform umfasst das adaptive Dialogsystem eine Schnittstelle, die dazu ausgebildet ist, ein durch den Dialogagenten in Abhängigkeit eines Dialogsegmentes der Dialogsegmentegruppe generiertes Dialogsegment zu empfangen. Gemäß einer Ausführungsform umfasst die Prozessoreinheit des adaptiven Dialogsystems eine Spracherkennungskomponente, die dazu ausgebildet ist, eine Spracherkennung eines audiobasierten Dialogsegmentes durchzuführen.

Gemäß der Erfindung ist die Prozessoreinheit des adaptiven Dialogsystems dazu ausgebildet, Dialogsegmente der Dialogsegmentegruppe zu kategorisierten und die kategorisierten Dialogsegmente nach ihrer Häufigkeit ihres Auftretens innerhalb der jeweiligen Kategorie zu gewichten.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
Fig. 1: eine schematische Darstellung eines computerimplementierten Verfahrens zum Bereitstellen eines adaptiven Dialogsystems gemäß einer Ausführungsform;
Fig. 2: eine schematische Darstellung eines adaptiven Dialogsystems gemäß einer Ausführungsform;
Fig. 3: eine schematische Darstellung eines adaptiven Dialogsystems gemäß einer weiteren Ausführungsform.

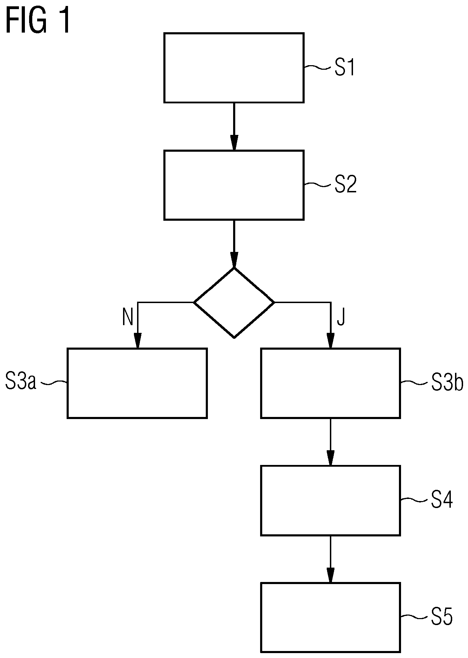

Figur 1 zeigt eine schematische Darstellung eines computerimplementierten Verfahrens zum Bereitstellen eines adaptiven Dialogsystems gemäß einer Ausführungsform.

In einem ersten Schritt S1, erfolgt das automatische Erfassen wenigstens eines Dialogsegments eines mit dem Dialogsystem kommunizierenden Dialogteilnehmers. Das Dialogsystem kann beispielsweise eine Chatbot und ein humanoider Roboter sein. Der mit dem Dialogsystem kommunizierende Dialogteilnehmer kann beispielsweise ein menschlicher Nutzer des Dialogsystems sein, welches das vom menschlichen Nutzer ausgegebene Dialogsegment, beispielsweise ein audiobasiertes Dialogsegment oder ein textbasiertes Dialogsegment, erfasst. Weiterhin kann das Dialogsystem textbasierte Dialogsegmente aus beispielsweise Chats von Kurznachrichtenmessangern erfassen.

In einem weiteren Schritt S2 erfolgt das automatische Vergleichen des von dem Dialogsystem erfassten Dialogsegments mit Dialogsegmenten eines gespeicherten Dialogsegmentemodells. Das Dialogsegmentemodell umfasst Dialogsegmente und entsprechend zugeordnete Dialogsegmente (Antworten) .

In einem weiteren Schritt S3a erfolgt ein automatisches Zuordnen wenigstens eines entsprechenden Dialogsegments zu dem erfassten Dialogsegment entsprechend dem im Dialogsegmetenmodell hinterlegten Dialogsegment. Diese Zuordnung erfolgt, falls das von dem Dialogsystem erfasste Dialogsegment in dem Dialogsegmentemodell enthalten und somit bekannt ist.

In einem alternativen Schritt S3b zu Schritt S3a erfolgt ein automatisches Hinzufügen des erfassten Dialogsegmentes zu einer Dialogsegmentegruppe, falls das erfasste Dialogsegment nicht in dem Dialogsegmentemodell enthalten ist. Die erfassten, aber unbekannten Dialogsegmente werden in der Dialogsegmentegruppe gesammelt und gespeichert.

In einem weiteren Schritt S4 erfolgt ein Generieren eines Dialogssegments (Antwort auf ein erfasstes aber unbekanntes Dialogsegment) in Abhängigkeit der Dialogsegmente der Dialogsegmentegruppe.

In einem weiteren Schritt S5 wird das generierte Dialogsegment in dem Dialogsegmentemodell gespeichert.

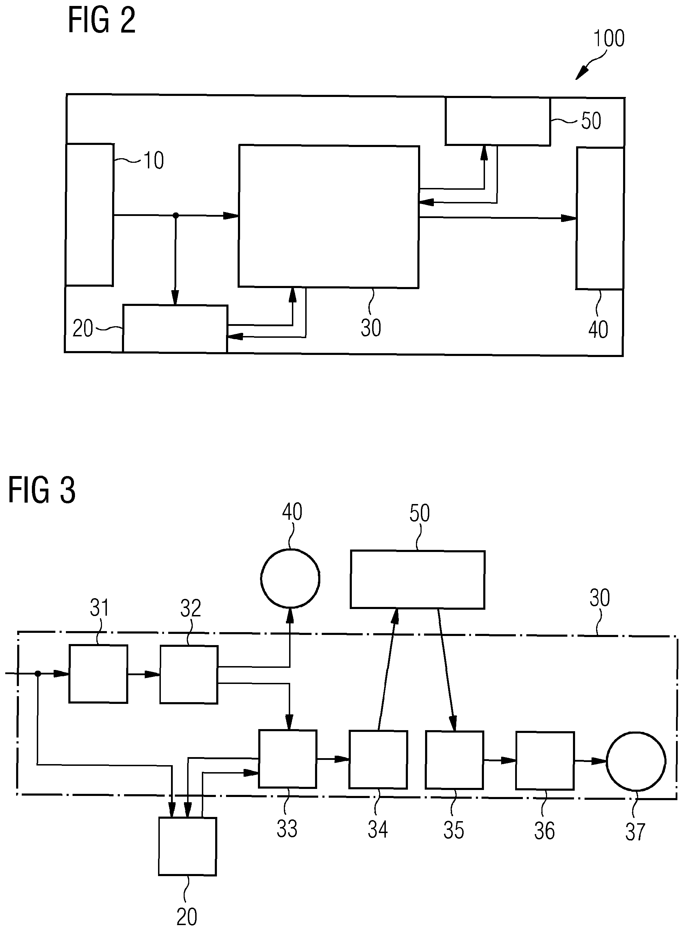

Figur 2 zeigt eine schematische Darstellung eines adaptiven Dialogsystems 100 gemäß einer Ausführungsform.

Das adaptive Dialogsystem 100 umfasst eine Erfassungseinheit 100 die ausgangsseitig mit der Speichereinheit 20 und mit der Prozessoreinheit 30 verbunden ist. Die Erfassungseinheit 10 ist dazu ausgelegt, audio- und textbasierte Dialogsegmente eines Dialogteilnehmers zu erfassen. Die erfassten Dialogsegmente können in der Speichereinheit 20 gespeichert werden.

Die Speichereinheit 20 kann beispielsweise eine Festplatte, eine SD-Karte und/oder ein Random Access Memory (RAM) sein.

Weiterhin ist die Speichereinheit 20 mit der Prozessoreinheit 30 verbunden. Die Prozessoreinheit 30 umfasst eine Spracherkennungskomponente. Mittels der Spracherkennungskomponente werden die audiobasierten Dialogsegmente in textbasierte Dialogsegmente umgewandelt und können in der Speichereinheit 20 gespeichert werden. Weiterhin kann in der Speichereinheit 20 die Dialogsegmentegruppe mit den erfassten, aber unbekannten Dialogsegmenten gespeichert werden.

Weiterhin ist die Prozessoreinheit 30 des adaptiven Dialogsystems 100 dazu ausgebildet, die erfassten Dialogelemente zu kategorisieren und die kategorisierten Dialogsegmente nach ihrer Häufigkeit ihres Auftretens innerhalb der jeweiligen Kategorie zu gewichten.

Weiterhin umfasst das adaptive Dialogsystem 100 eine Ausgabeeinheit 40. Die Ausgabeeinheit 40 ist mit der Prozessoreinheit 30 verbunden. Die Ausgabeeinheit 40 kann beispielsweise ein Graphical User Interface (GUI), ein Webinterface, ein Bildschirm eines Handheld oder Computers oder ein Audiogerät sein. Über die Ausgabeeinheit 40 werden einem Dialogagenten, die kategorisierten und priorisierten Dialogsemente der Dialogsegmentegruppe bereitgestellt.

Weiterhin umfasst das adaptive Dialogsystem 100 eine Schnittstelle 50. Die Schnittstelle 50 ist mit der Prozessoreinheit 30 verbunden. Die Schnittstelle 50 kann beispielsweise eine audio- und/oder textbasierte und/oder visuelle Schnittstelle sein. Die Schnittstelle 50 ist dazu ausgebildet, ein von einem Dialogagenten generiertes audio- und/oder textbasiertes Dialogelement zu empfangen. Die Schnittstellt 50 kann beispielsweise ein Graphical User Interface (GUI), Webinterface oder ein Sprachinterface sein.

In einer alternativen Ausführungsform können die Ausgabeeinheit 40 und die Schnittstelle 50 zu einer Aus- und Eingabeeinheit kombiniert sein.

Figur 3 zeigt eine schematische Darstellung eines adaptiven Dialogsystems gemäß einer weiteren Ausführungsform.

In Figur 3 ist eine beispielhafte Umsetzung des adaptiven Dialogsystems 100 auf der Basis der Programmierung des humanoiden Roboters "Pepper" mit der Syntax von QiChat dargestellt.

Die Ausführungsform des adaptiven Dialogsystems gemäß Figur 3 stellt hierbei keine Einschränkung zur Umsetzung in anderen Programmiersprachen und/oder auf anderen Systemen dar.

In Figur 3 ist die Prozessoreinheit 30 eines Dialogsystems 100 dargestellt. Die Prozessoreinheit ist mit einer Empfangseinheit 10 (nicht dargestellt), einer Speichereinheit 20, einer Schnittstelle 50 verbunden.

In dieser Ausführungsform stellt die Schnittstelle 50 sowohl die Dialogsegmentegruppe dem Dialogagenten bereit und empfängt auch das generierte audio- und/oder textbasiertes Dialogelement.

Das mit dem Bezugszeichen 31 bezeichnete Modul dient der Umwandlung eines durch die Empfangseinheit erfassten audiobasierten Dialogsegments in ein textbasiertes Dialogsegment durch eine Spracherkennung. Die Spracherkennung kann für verschiedene Sprachen ausgelegt sein. Das audio-basierte Dialogsegment wird in der Speichereinheit 20 gespeichert. In dem Modul 32 erfolgt in einem QiChat Prozess das automatische Vergleichen des in ein textbasiertes Dialogsegment gewandelten Dialogsegments mit den im Dialogsegmentemodell hinterlegten Dialogsegmenten. Entspricht das erfasst Dialogsegment einem in dem Dialogsegmentemodell hinterlegten Dialogsegment, so wird eine entsprechende Antwort dem Diaologteilnehmer 40 bereitgestellt.

Das Dialogsegmentemodell kann auch für verschiedene Sprachen ausgelegt sein.

Wird ein textbasiertes Dialogsegment erfasst, wird keine Spracherkennung durchgeführt, sondern gleich ein Vergleich des erfassten Dialogsegments mit den in dem Dialogsegmentemodell enthaltenen Dialogsegmenten durchgeführt.

Kann das erfasste Dialogsegment keinem Dialogsegment der Dialogegruppe zugeordnet werden, so wird das nicht bekannte Dialogsegment in Modul 33 in einer Dialogsegmentegruppe hinterlegt und kann in der Speichereinheit 20 gespeichert werden.

Das mit dem Bezugszeichen 34 bezeichnete Modul bezeichnet einen "Natural Language Classifier", in dem gleichartige Dialogsegmente der Dialogsegmentegruppe in eine gemeinsame Kategorie/Cluster zusammengefasst werden, der eine entsprechend gemeinsame Antwort zugeordnet werden kann. Diese in einer Kategorie zusammengefassten Dialogelemente werden entsprechend der Häufigkeit ihres Auftretens gewichtet, wodurch sich eine Bearbeitungsreihenfolge durch den Dialogagenten ergibt.

Die in dem Modul 34 in Kategorien zusammengefassten Dialogelemente werden über die Schnittstelle 50 einem Dialogagenten bereitgestellt, welcher eine entsprechende Antwort bereitstellt. Diese wird über das Modul 35 als ein Dialogsegmentepaar einem Syntaxgenerator 36 bereitgestellt. Das Dialogsegmentepaar umfasst die unterschiedlichen Varianten der Dialogsegmente einer Kategorie und der von dem Dialogagenten entsprechend in Abhängigkeit der Dialogsegmente einer Kategorie generierten Antwort. Der Syntaxgenerator setzt die unterschiedlichen Varianten der Dialogsegmente einer Kategorie in ein entsprechendes QiChat statement um. Dieses kann mit der entsprechenden generierten Antwort in das Dialogsegmentemodell eingespielt werden.

Die Ausführungsform bezieht sich auf das Dialogsystem nach Pepper von Softbank Robotics. Die Programmierung folgt der Syntax von Qichat, die als Teil des Moduls AIDialog im Betriebssystem NAOqi OS definiert ist.

Pepper ist einem Menschen nachempfundener humanoider Roboter, der darauf programmiert ist, Menschen und deren Mimik und Gestik zu analysieren und auf diese Emotionszustände entsprechend zu reagieren. Das Ziel besteht darin, dass Pepper einen guten Eindruck macht, indem dieser auch allgemeine Fragen beantworten kann.

Alle gestellten Fragen werden in dem System, in der Speichereinheit 20 als Audio-Datei, beispielsweise als nicht komprimiertes Format .wav-Datei oder als komprimiertes Format .mp3-Datei gespeichert. Weiterhin wird das Ergebnis der Spracherkennung als Text-Datei, beispielsweise im .txt-Format in der Speichereinheit 20 gespeichert. Das Abspeichern und Vorhalten der Audio-Datei hat den Vorteil, wenn die Spracherkennung nicht korrekt durchgeführt wurde, dass diese wiederholt werden kann und somit ein eventuell unbekanntes Dialogsegment nicht verloren geht.

Durch das Aufzeichnen von Dialogsegmenten (Fragen), auf die das Dialogsystem keine Antwort kennt, wurden folgende beispielhafte Varianten besonders häufig erfasst:
- Wer ist Weltmeister im Fußball
- Wer ist der Weltmeister im Fußball
- Welches Land ist Weltmeister im Fußball
- Wer gewann die Fußballweltmeisterschaft
- Wer gewann den Fußballweltcup
- Wer gewann die Fußballweltmeisterschaft 2014

Für alle erfassten Varianten kann dieselbe Antwort zurückgegeben werden: Deutschland gewann die Weltmeisterschaft 2014.

Als Ergebnis auf die erfassten Varianten und die dazugehörige Antwort, kann vom Dialogagenten folgendes beispielhaftes Statement in das Dialogsegmentemodell (QiChat Modul) geladen werden, damit das Dialogssystem zukünftige Anfragen diesbezüglich beantworten kann:
u:(["[wer"welches Land"]ist{der}Weltmeister im Fußball" "Wer gewann die Fußballweltmeisterschaft]{2014}"]) Deutschland gewann die Weltmeisterschaft 2014.

Diesbezüglich sind zunächst alle Dialogsegmente aufzufangen, die im Dialogsegmentemodell nicht enthalten sind und somit ist es nicht möglich,eine Antwort zuzuordnen.

Das Auffangen der nicht enthaltenen Dialogsegmente kann wie durch folgendes beispielhafte Statement erfolgen:
#fange alles andere ab
u: (_ *) du sagtest $1 aber ich habe keine Regel für dieses Dialogsegment $output_heard= $1

Für die Speicherung nicht enthaltender Dialogsegmente wird beispielsweise ein Python-Skript zum Sammeln der nicht verstandenen Dialogsegmente $output_heard in einer Datei white_utter.text verwendet:

```
 Import qi.path
 wutterFilePath =
 qi.path.userWriteableDataPath(self.packageUid(), "whi
 te_utter.text")
 wutterFile.write($output_heard)
```

Der Syntaxgenerator setzt die unterschiedlich erfassten Varianten von Dialogsegmente in ein entsprechendes QiChat statement um, wie beispielshaft dargestellt:
u:(["[wer"welches Land"]ist{der}Weltmeister im Fußball" "Wer gewann die Fußballweltmeisterschaft]{2014}"])

Die dazugehörige beispielhafte Antwort: "Deutschland gewann die Weltmeisterschaft 2014." wird vom Dialogtrainer generiert und audio- oder textbasiert bereitgestellt.

Zusammenfassend betrifft die vorliegende Erfindung ein computerimplementiertes Verfahren zum Bereitstellen eines adaptiven Dialogsystems gemäß Anspruch 1.

### Bezugszeichenliste

- 100: adaptives Dialogsystem
- 10: Erfassungseinheit
- 20: Speichereinheit
- 30: Prozessoreinheit
- 40: Ausgabeeinheit
- 50: Schnittstelle
- 31: Modul zur Umwandlung von Sprache in Text
- 32: Modul QiChat Prozess
- 33: Modul Erstellung der Liste der unbekannten Dialogsegmente
- 34: Modul Natural Language Classification und Priorisierung
- 35: Modul Antwort-Frage-Zuordnung
- 36: Modul Syntax Generator
- 37: Modul QiChat Prozess

## Patentansprüche

1. Computerimplementiertes Verfahren zum Bereitstellen eines adaptiven Dialogsystems mit den Schritten:
Automatisches Erfassen (S1) wenigstens eines Dialogsegmentes eines mit dem Dialogsystem kommunizierenden Dialogteilnehmers;
Automatisches Vergleichen (S2) des erfassten Dialogsegmentes mit Dialogsegmenten eines gespeicherten Dialogsegmentemodells;
Automatisches Zuordnen (S3a) wenigstens eines entsprechenden Dialogsegmentes zu dem erfassten Dialogsegment entsprechend dem Dialogsegmentemodell, falls das erfasste Dialogsegment in dem Dialogsegmentemodell enthalten ist, oder
Automatisches Hinzufügen (S3b) des erfassten Dialogsegmentes zu einer Dialogsegmentegruppe, falls das erfasste Dialogsegment nicht in dem Dialogsegmentemodell enthalten ist;
wobei die Dialogsegmente der Dialogsegmentegruppe kategorisiert werden, und
wobei die kategorisierten Dialogsegmente nach der Häufigkeit ihres Auftretens innerhalb der jeweiligen Kategorie gewichtet werden, wodurch eine Sortierung innerhalb der Kategorie erfolgt;
Generieren (S4) eines Dialogsegmentes in Abhängigkeit der Dialogsegmente der Dialogsegmentegruppe, wobei Dialogsegmente mit der höchsten Priorität gemäß der Sortierung zuerst bearbeitet werden;
Speichern (S5) des generierten Dialogsegmentes in dem Dialogsegmentemodell.

2. Computerimplementiertes Verfahren nach Anspruch 1, wobei das erfasste Dialogsegment ein audio- und/oder ein textbasiertes Dialogsegment aufweist.

3. Computerimplementiertes Verfahren nach Anspruch 2, wobei das erfasste audio- und/oder textbasierte Dialogsegment in wenigstens einer Speichereinheit des Dialogsystems gespeichert wird.

4. Computerimplementiertes Verfahren nach Anspruch 2, wobei das erfasste audiobasierte Dialogsegment mittels Spracherkennung automatisch in ein textbasiertes Dialogsegment gewandelt wird.

5. Computerimplementiertes Verfahren nach Anspruch 1, wobei die kategorisierten Dialogsegmente über eine audio- und/oder visuelle und/oder textbasierte Ausgabeeinheit des Dialogsystems einem Dialogagenten bereitgestellt werden.

6. Computerimplementiertes Verfahren nach Anspruch 5, wobei in Abhängigkeit des bereitgestellten Dialogsegmentes ein Dialogsegment von dem Dialogagenten generiert wird.

7. Computerimplementiertes Verfahren nach Anspruch 6, wobei das von dem Dialogagenten generierte Dialogsegment ein audio- und/oder textbasiertes Dialogsegment ist.

8. Computerimplementiertes Verfahren nach Anspruch 7, wobei das von dem Dialogagenten generierte Dialogsegment in dem Dialogsegmentemodell in einem Speicherelement des Dialogsystems gespeichert wird.

9. Adaptives Dialogsystem (100) umfassend:
eine Erfassungseinheit (10), welche dazu ausgebildet ist, wenigstens ein Dialogsegment eines Dialogteilnehmers zu erfassen,
eine Speichereinheit (20), welche dazu ausgebildet ist, wenigstens ein erfasstes Dialogsegment eines Dialogteilnehmers zu speichern,
eine Prozessoreinheit (30), welche dazu ausgebildet ist, wenigstens ein erfasstes Dialogsegment mit Dialogsegmenten eines gespeicherten Dialogsegmentemodells automatisch zu vergleichen und ein Dialogsegment zu dem wenigstens einen erfassten Dialogsegment entsprechend dem Dialogsegmentemodell zu zuordnen, falls das erfasste Dialogsegment in dem Dialogsegmentemodell enthalten ist oder wenigstens ein erfasstes Dialogsegment zu einer Dialogsegmentegruppe automatisch hinzuzufügen, falls das erfasste Dialogsegment nicht im Dialogsegmentemodell enthalten ist,
wobei die Dialogsegmente der Dialogsegmentegruppe kategorisiert werden, und
wobei die kategorisierten Dialogsegmente nach der Häufigkeit ihres Auftretens innerhalb der jeweiligen Kategorie gewichtet werden, wodurch eine Sortierung innerhalb der Kategorie erfolgt;
eine Ausgabeeinheit (40), welche dazu ausgebildet ist, die Dialogsegmentegruppe einem Dialogagenten bereitzustellen, und
eine Schnittstelle (50), die dazu ausgebildet ist, ein durch den Dialogagenten in Abhängigkeit eines Dialogsegmentes der Dialogsegmentegruppe generiertes Dialogsegment zu empfangen, wobei Dialogsegmente mit der höchsten Priorität gemäß der Sortierung zuerst bearbeitet werden, und
wobei das generierte Dialogsegment in dem Dialogsegmentemodell gespeichert wird.

10. Adaptives Dialogsystem (100) nach Anspruch 9, wobei die Prozessoreinheit (30) eine Spracherkennungskomponente umfasst, die dazu ausgebildet ist, eine Spracherkennung eines audiobasierten Dialogsegmentes durchzuführen.

11. Chatbot oder Roboter mit einem adaptiven Dialogsystem (100) gemäß einem der Ansprüche 9 bis 10.

## Claims

1. Computer-implemented method for providing an adaptive dialogue system, including the steps of:
automatically capturing (S1) at least one dialogue segment from a dialogue participant communicating with the dialogue system;
automatically comparing (S2) the captured dialogue segment with dialogue segments of a stored dialogue segment model;
automatically assigning (S3a) at least one corresponding dialogue segment to the captured dialogue segment according to the dialogue segment model if the captured dialogue segment is contained in the dialogue segment model or
automatically adding (S3b) the captured dialogue segment to a dialogue segment group if the captured dialogue segment is not contained in the dialogue segment model;
wherein the dialogue segments of the dialogue segment group are categorized, and
wherein the categorized dialogue segments are weighted according to the frequency of their occurrence within the respective category, whereby sorting within the category is implemented;
generating (S4) a dialogue segment depending on the dialogue segments of the dialogue segment group, wherein dialogue segments with the highest priority according to the sorting are processed first;
storing (S5) the generated dialogue segment in the dialogue segment model.

2. Computer-implemented method according to Claim 1, wherein the captured dialogue segment comprises an audio-based and/or text-based dialogue segment.

3. Computer-implemented method according to Claim 2, wherein the captured audio-based and/or text-based dialogue segment is stored in at least one memory unit of the dialogue system.

4. Computer-implemented method according to Claim 2, wherein the captured audio-based dialogue segment is automatically converted into a text-based dialogue segment by means of voice recognition.

5. Computer-implemented method according to Claim 1, wherein the categorized dialogue segments are provided to a dialogue agent via an audio-based and/or visual and/or text-based output unit of the dialogue system.

6. Computer-implemented method according to Claim 5, wherein a dialogue segment is generated by the dialogue agent depending on the provided dialogue segment.

7. Computer-implemented method according to Claim 6, wherein the dialogue segment generated by the dialogue agent is an audio-based and/or text-based dialogue segment.

8. Computer-implemented method according to Claim 7, wherein the dialogue segment generated by the dialogue agent is stored in the dialogue segment model in a memory element of the dialogue system.

9. Adaptive dialogue system (100) comprising:
a capturing unit (10), which is embodied to capture at least one dialogue segment of a dialogue participant,
a memory unit (20), which is embodied to store at least one captured dialogue segment of a dialogue participant,
a processor unit (30), which is embodied to automatically compare at least one captured dialogue segment to dialogue segments of a stored dialogue segment model and assign a dialogue segment to the at least one captured dialogue segment according to the dialogue segment model if the captured dialogue segment is contained in the dialogue segment model or automatically add at least one captured dialogue segment to a dialogue segment group if the captured dialogue segment is not contained in the dialogue segment model,
wherein the dialogue segments of the dialogue segment group are categorized, and
wherein the categorized dialogue segments are weighted according to the frequency of their occurrence within the respective category, whereby sorting within the category is implemented;
an output unit (40), which is embodied to provide the dialogue segment group to a dialogue agent, and
an interface (50), which is embodied to receive a dialogue segment generated by the dialogue agent depending on a dialogue segment of the dialogue segment group, wherein dialogue segments with the highest priority according to the sorting are processed first, and
wherein the generated dialogue segment is stored in the dialogue segment model.

10. Adaptive dialogue system (100) according to Claim 9, wherein the processor unit (30) comprises a voice recognition component, which is embodied to carry out a voice recognition of an audio-based dialogue segment.

11. Chatbot or robot having an adaptive dialogue system (100) according to either of Claims 9 and 10.

## Revendications

1. Procédé mis en oeuvre par ordinateur pour fournir un système de dialogue adaptatif, comprenant les étapes consistant à :
détecter automatiquement (S1) au moins un segment de dialogue d'un participant au dialogue communiquant avec le système de dialogue ;
comparer automatiquement (S2) le segment de dialogue détecté avec des segments de dialogue d'un modèle de segment de dialogue stocké en mémoire ;
associer automatiquement (S3a) au moins un segment de dialogue correspondant au segment de dialogue détecté correspondant au modèle de segment de dialogue, si le segment de dialogue détecté est inclus dans le modèle de segment de dialogue, ou
ajouter automatiquement (S3b) le segment de dialogue détecté à un groupe de segments de dialogue si le segment de dialogue détecté n'est pas inclus dans le modèle de segment de dialogue ;
dans lequel les segments de dialogue du groupe de segments de dialogue sont catégorisés, et
dans lequel les segments de dialogue catégorisés sont pondérés en fonction de la fréquence de leur occurrence dans la catégorie respective, ce qui entraîne un tri au sein de la catégorie ;
générer (S4) un segment de dialogue en fonction des segments de dialogue du groupe de segments de dialogue, en traitant d'abord les segments de dialogue présentant la priorité la plus élevée en fonction du tri ;
stocker en mémoire (S5) le segment de dialogue généré dans le modèle de segment de dialogue.

2. Procédé mis en oeuvre par ordinateur selon la revendication 1, dans lequel le segment de dialogue détecté comprend un segment de dialogue audio et/ou un segment de dialogue textuel.

3. Procédé mis en oeuvre par ordinateur selon la revendication 2, dans lequel le segment de dialogue audio et/ou textuel détecté est stocké en mémoire dans au moins une unité de stockage du système de dialogue.

4. Procédé mis en oeuvre par ordinateur selon la revendication 2, dans lequel le segment de dialogue audio détecté est automatiquement converti en un segment de dialogue textuel par reconnaissance vocale.

5. Procédé mis en oeuvre par ordinateur selon la revendication 1, dans lequel les segments de dialogue catégorisés sont fournis à un agent de dialogue par l'intermédiaire d'une unité de sortie audio et/ou visuelle et/ou textuelle du système de dialogue.

6. Procédé mis en oeuvre par ordinateur selon la revendication 5, dans lequel un segment de dialogue est généré par l'agent de dialogue en fonction du segment de dialogue fourni.

7. Procédé mis en oeuvre par ordinateur selon la revendication 6, dans lequel le segment de dialogue généré par l'agent de dialogue est un segment de dialogue audio et/ou textuel.

8. Procédé mis en oeuvre par ordinateur selon la revendication 7, dans lequel le segment de dialogue généré par l'agent de dialogue est stocké en mémoire dans le modèle de segment de dialogue dans un élément de stockage du système de dialogue.

9. Système de dialogue adaptatif (100), comprenant :
une unité de détection (10) qui est conçue pour détecter au moins un segment de dialogue d'un participant au dialogue,
une unité de stockage (20) qui est conçue pour stocker en mémoire au moins un segment de dialogue détecté d'un participant au dialogue,
une unité de traitement (30) qui est conçue pour comparer automatiquement au moins un segment de dialogue détecté avec des segments de dialogue d'un modèle de segment de dialogue stocké en mémoire et pour associer un segment de dialogue au au moins un segment de dialogue détecté correspondant au modèle de segment de dialogue si le segment de dialogue détecté est contenu dans le modèle de segment de dialogue ou pour ajouter automatiquement au moins un segment de dialogue détecté à un groupe de segments de dialogue si le segment de dialogue détecté n'est pas contenu dans le modèle de segment de dialogue,
dans lequel les segments de dialogue du groupe de segments de dialogue sont catégorisés, et
dans lequel les segments de dialogue catégorisés sont pondérés en fonction de la fréquence de leur occurrence dans la catégorie respective, ce qui entraîne un tri dans la catégorie ;
une unité de sortie (40) qui est conçue pour fournir le groupe de segments de dialogue à un agent de dialogue ; et
une interface (50) qui est conçue pour recevoir un segment de dialogue généré par l'agent de dialogue en fonction d'un segment de dialogue du groupe de segments de dialogue, en traitant d'abord les segments de dialogue présentant la priorité la plus élevée en fonction du tri ; et
dans lequel le segment de dialogue généré est stocké en mémoire dans le modèle de segment de dialogue.

10. Système de dialogue adaptatif (100) selon la revendication 9, dans lequel l'unité de traitement (30) comprend un composant de reconnaissance vocale qui est conçu pour effectuer une reconnaissance vocale d'un segment de dialogue audio.

11. Agent conversationnel ou robot avec un système de dialogue adaptatif (100) selon l'une quelconque des revendications 9 à 10.
